# EUROPEAN PATENT APPLICATION

(11) **EP 3 505 428 A1**
(43) Date of publication of application: **03.07.2019**
(21) Application number: 18214821.3
(22) Date of filing: 20.12.2018
(51) Int. Cl.: B62J 6/00, B62J 6/04

(54) **LIGHT**

(30) Priority: 27.12.2017 JP 2017251955
(71) Applicant: CATEYE CO., LTD., Osaka-shi, Osaka 546-0041 (JP)
(72) Inventor: NAGANO, Toshiyuki, Osaka-shi, Osaka 546-0041 (JP); TSUKAMOTO, Satoshi, Osaka-shi, Osaka 546-0041 (JP)
(74) Representative: Prüfer & Partner mbB Patentanwälte · Rechtsanwälte

(57) **Abstract**

A light attached to an end of a hollow handlebar of a bicycle includes a first portion (a portion exposed outside the handlebar) accommodating a light emitting unit and a battery; a second portion (an insertion portion) configured to be inserted into the hollow handlebar to fix the light to the handlebar; and an adjustment mechanism configured to adjust a maximum width of the second portion, the second portion having a space therein, the adjustment mechanism adjusting the maximum width of the second portion by using a rod-shaped member extending through the space in the second portion in an axial direction of the second portion to change an axial length of the second portion.

## Description

### BACKGROUND OF THE INVENTION

### Field of the Invention

The present invention relates to a light attached to an end of a handlebar of a bicycle.

### Description of the Background Art

As a light to be attached to an end of a handlebar of a bicycle, a light that is inserted into a hollow portion of a handlebar in the form of a pipe and thus fixed to the handlebar has been conventionally known. For example, Japanese Patent Laying-Open No. 2005-162183 discloses a light proposed as a light to be attached to a handle via a bar end (a bar end bar) to resolve a problem caused as there is a limited space between a grip of a handlebar and a stem (or inside the grip) for attaching accessories.

U.S. Patent Application Publication No. 2004/0040407 discloses a light proposed as a direction indicator integrated with a grip of a handlebar and operated via a switch provided at the grip to prevent a collision with a vehicle from behind. For this light, a circuit including a power supply is disposed inside the handlebar.

International Publication No. 2017/003074 discloses a light, which is a grip rather than a light, and is proposed as a device having a direction indicating function and a brake lamp function. For this light as well, a circuit including a power supply is disposed inside a handlebar.

### SUMMARY OF THE INVENTION

A conventional light has an insertion portion inserted into a hollow portion of a handlebar, and the insertion portion is formed to have a maximum width to have a diameter slightly larger than an inner diameter of the hollow portion of the handlebar, and is pushed inside the handlebar while being elastically compressed to fix the light to the handlebar.

As bicycles are also industrial products, they have handlebars with a substantially uniform maximum width regardless of their vehicular types, however, they have different inner diameters. This is because each handlebar is composed of metal different in thickness depending on the handlebar's strength, material quality and weight. When the handlebar has a larger inner diameter, the light may be fixed with insufficient strength. If the light has the insertion portion formed to have an increased maximum width to correspond to the handlebar having the large inner diameter, the light may not be able to be fixed to a handlebar having a small inner diameter.

An object of the present invention is to attach a light to a handlebar with sufficient fixing strength.

A light according to the present invention is a light attached to an end of a hollow handlebar of a bicycle, and comprises: a first portion (a portion exposed outside the handlebar) accommodating a light emitting unit and a battery; a second portion (an insertion portion) configured to be inserted into the hollow handlebar to fix the light to the handlebar; and an adjustment mechanism configured to adjust a maximum width of the second portion, the second portion having a space therein, the adjustment mechanism being capable of adjusting the maximum width of the second portion by using a bolt extending through the space in the second portion in an axial direction of the second portion to change an axial length of the second portion.

In one embodiment, in the light, the adjustment mechanism includes a first member configuring a portion of the second portion and a second member configuring another portion of the second portion, and the adjustment mechanism adjusts the maximum width of the second portion by translating the second member relative to the first member in a direction perpendicular to the axial direction.

In one embodiment, in the light, the first member and the second member are translatable relative to each other in a direction perpendicular to the axial direction in contact with each other such that a surface extending in a direction which is oblique relative to the axial direction of the second portion serves as a boundary.

In one embodiment, in the light, the bolt of the adjustment mechanism is used to apply an axial compressive force to the second portion to compress the second portion in an axial direction to elastically deform the second portion and increase the second portion in diameter to adjust a maximum width of the second portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a bicycle to which a light according to one embodiment of the present invention is attached.
Fig. 2 is a cross section of a handlebar.
Fig. 3 shows a light according to a comparative example.
Fig. 4 is a cross section of a light according to a first embodiment.
Fig. 5 is a cross section of the Fig. 4 light with a second portion (or an insertion portion) having an increased maximum width (without showing a bolt shown in Fig. 4).
Fig. 6 is a cross section of a light according to a second embodiment.

### DESCRIPTION OF THE PREFERRED EMBODIMENTS

Hereinafter, embodiments of the present invention will be described. In the figures, identical or corresponding components are identically denoted and may not be described redundantly.

Note that in any embodiment described hereinafter, when numbers, amounts and the like are referred to, the present invention is not necessarily limited in scope thereto unless otherwise specified. Furthermore, in any embodiment described hereinafter, each component is not necessarily essential to the present invention unless otherwise specified.

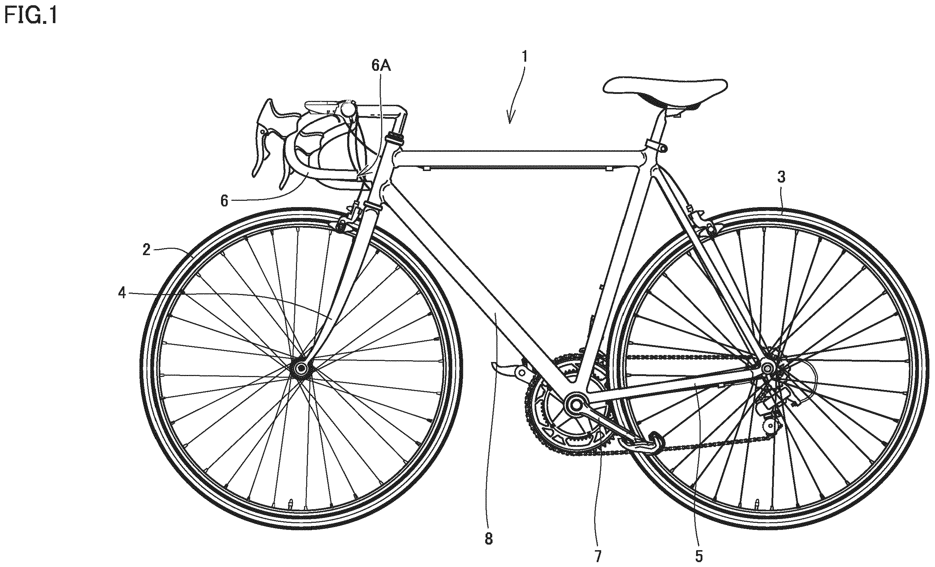

Fig. 1 shows a bicycle to which a light according to one embodiment of the present invention is attached. With reference to Fig. 1, a bicycle 1 includes a front wheel 2 and a rear wheel 3, a front fork 4 and a chain stay 5, a handlebar 6 to which a light to be described later is attached, and a gear crank 7 that rotates together with a pedal.

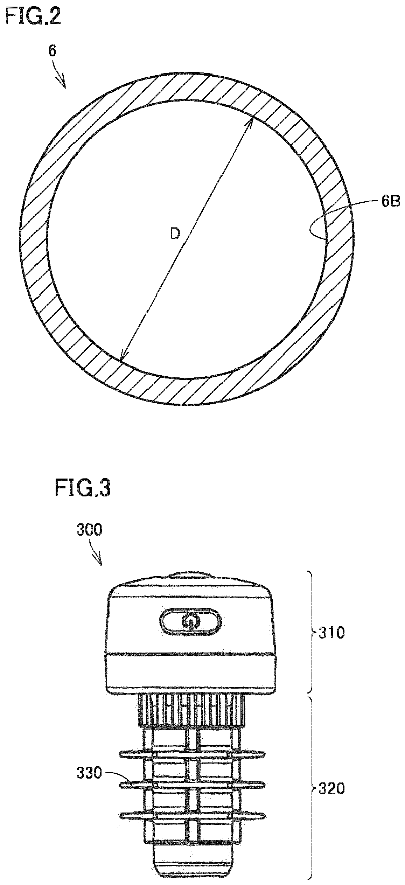

Handlebar 6 has a bar end portion 6A facing a rear side of the bicycle. As shown in Fig. 2, handlebar 6 is a pipe-shaped member having a cavity 6B. Cavity 6B opens at bar end portion 6A. Cavity 6B has a diameter D. Diameter D is an inner diameter of handlebar 6 that is the pipe-shaped member. While handlebar 6 has a substantially fixed outer diameter as it is set to a thickness easily grippable by a rider, handlebar 6 has a varying inner diameter (or cavity 6B varies in diameter D) as handlebar 6 is composed of metal different in thickness depending on strength or the like that handlebar 6 is required to have.

### (Comparative Example)

Fig. 3 shows a light 300 according to a comparative example. Light 300 shown in Fig. 3 is fixed to bar end 6A of handlebar 6. Light 300 has an exposed portion 310 that has a light emitting unit accommodated therein and is exposed outside of handlebar 6, an insertion portion 320 inserted into cavity 6B of handlebar 6, and an elastic portion protruding radially outward from a lateral surface of insertion portion 320. When insertion portion 320 is inserted into cavity 6B of handlebar 6, elastic portion 330 is deformed to bend. By the resilience of elastic portion 330 bent, elastic portion 330 is pressed against an inner circumferential surface of handlebar 6 and a frictional force is caused between elastic portion 330 and the inner circumferential surface of handlebar 6. As a result, light 300 is fixed to bar end 6A of handlebar 6. When light 300 is thus fixed, light 300 has the light emitting unit directed toward the rear side of bicycle 1. That is, light 300 is fixed to bar end 6A of handlebar 6 so as to emit light toward the rear side of bicycle 1.

Light 300 is fixed to handlebar 6 by the resilience of elastic portion 330 deformed. However, when cavity 6B has a large diameter D, elastic portion 330 is deformed in a small amount and accordingly, exhibits reduced resilience, which decreases frictional force for fixing light 300 to handlebar 6. In order to prevent this, if elastic portion 330 is projected in an increased amount, and cavity 6B has a small diameter, it is difficult to insert insertion portion 320 into cavity 6B.

The lights according to first and second embodiments described hereinafter provide structures for solving such a problem.

### (First Embodiment)

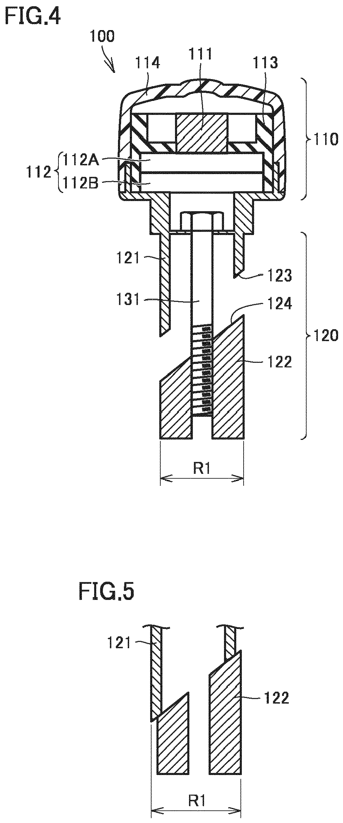

Fig. 4 is a cross section of a light 100 according to a first embodiment. Light 100 shown in Fig. 4 is fixed to bar end 6A of handlebar 6. Light 100 comprises an exposed portion 110 that has a light emitting unit accommodated therein and is exposed outside of handlebar 6, and an insertion portion 120 inserted into cavity 6B of handlebar 6.

Exposed portion 110 includes a light emitting unit 111, a battery 112 (112A, 112B), a spacer 113, and a case 114. Light emitting unit 111 receives power from battery 112 to emit light. Light emitting unit 111 and battery 112 are accommodated in case 114 together with spacer 113. Case 114 is a member (for example, transparent in red) that transmits light from light emitting unit 111.

Insertion portion 120 is composed of a first member 121 and a second member 122. First member 121 and second member 122 have inclined surfaces 123 and 124, respectively, parallel to each other. Second member 122 is screwed to a bolt 131. By tightening bolt 131, second member 122 moves in the axial direction toward first member 121, and inclined surfaces 123 and 124 come into contact with each other. When second member 122 is further moved in the axial direction with inclined surfaces 123 and 124 in contact with each other, then, as shown in Fig. 5, second member 122 moves with respect to first member 121 in a direction perpendicular to the axis. This changes (or increases) a maximum width R1 of the entire insertion portion 120 that is a combination of first member 121 and second member 122. That is, maximum width R1 of insertion portion 120 can be adjusted by translating first member 121 and second member 122 in a direction perpendicular to the axis.

Insertion portion 120 is inserted into cavity 6B with maximum width R1 of insertion portion 120 being smaller than diameter D of cavity 6B of handlebar 6 and in that state second member 122 is moved with respect to first member 121 in a direction perpendicular to the axis to increase maximum width R1 of insertion portion 120. While doing so, exposed portion 110 is detached from insertion portion 120. By pressing an outer circumferential surface of insertion portion 120 against an inner circumferential surface of cavity 6B, a frictional force is generated between insertion portion 120 and the inner circumferential surface of handlebar 6. Thus light 100 has insertion portion 120 fixed to bar end 6A of handlebar 6. Thereafter, exposed portion 110 is attached to insertion portion 120. Light 100 is thus fixed to bar end 6A of handlebar 6. When light 100 is thus fixed, light 100 has its light emitting unit directed toward the rear side of bicycle 1. That is, light 100 is fixed to bar end 6A of handlebar 6 so as to emit light toward the rear side of bicycle 1.

Insertion portion 120 has a maximum width adjusted by a simple operation of tightening bolt 131 to move second member 122, so that even when cavity 6B has a large diameter D a frictional force for fixing light 100 to handlebar 6 can be ensured, whereas even when cavity 6B has a small diameter D insertion portion 120 can be inserted into cavity 6B to fix light 100 to the handlebar. That is, according to the present embodiment, light 100 ensuring sufficient strength to fix it to a handlebar can be provided.

### (Second Embodiment)

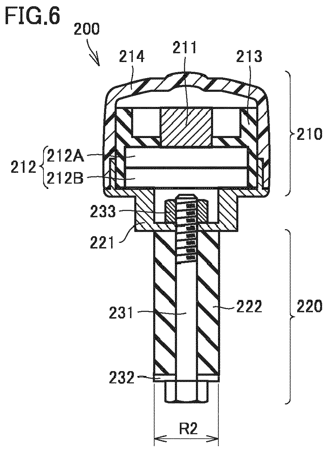

Fig. 6 is a cross section of a light 200 according to a second embodiment.
Light 200 shown in Fig. 6 is fixed to bar end 6A of handlebar 6. Light 200 has an exposed portion 210 that has a light emitting unit accommodated therein and is exposed outside of handlebar 6, and an insertion portion 220 inserted into cavity 6B of handlebar 6.

Exposed portion 210 includes a light emitting unit 211, a battery 212 (212A, 212B), a spacer 213, and a case 214. Light emitting unit 211 receives power from battery 212 to emit light. Light emitting unit 211 and battery 212 are accommodated in case 214 together with spacer 213. Case 214 transmits light from light emitting unit 211.

Insertion portion 220 is composed of a first member 221 and a second member 222. Insertion portion 220 has a bolt 231 inserted therethrough. Bolt 231 has an end screwed to a nut 233 through a washer 232. By tightening nut 233, an axial compressive force is applied by bolt 231 to second member 222 of insertion portion 220. The axial compressive force increases the insertion portion 220 second member 222 in diameter. That is, relatively rotating bolt 231 and nut 233 can adjust a maximum width R2 of insertion portion 220. Second member 222 of insertion portion 220 is made for example of an elastic material such as rubber so that it can be increased in diameter by the axial compressive force applied by bolt 231.

With maximum width R2 of insertion portion 220 being smaller than diameter D of cavity 6B of handlebar 6, insertion portion 220 is inserted into cavity 6B, and in that state, nut 233 is tightened to increase maximum width R2 of insertion portion 220. While doing so, exposed portion 210 is detached from insertion portion 220. By pressing an outer circumferential surface of insertion portion 220 against an inner circumferential surface of cavity 6B, a frictional force is caused between insertion portion 220 and the inner circumferential surface of handlebar 6. Thus light 200 has insertion portion 220 fixed to bar end 6A of handlebar 6. Thereafter, exposed portion 210 is attached to insertion portion 220. Light 200 is thus fixed to bar end 6A of handlebar 6. When light 200 is thus fixed, light 200 has its light emitting unit directed toward the rear side of bicycle 1. That is, light 200 is fixed to bar end 6A of handlebar 6 so as to emit light toward the rear side of bicycle 1.

Insertion portion 220 has a maximum width adjusted by a simple operation of tightening nut 233, so that even when cavity 6B has a large diameter D a frictional force for fixing light 200 to handlebar 6 can be ensured, whereas even when cavity 6B has a small diameter D insertion portion 220 can be inserted into cavity 6B to fix light 200 to the handlebar. That is, according to the present embodiment, light 200 ensuring sufficient strength to fix it to a handlebar can be provided.

### (Summary)

The above contents are summarized as follows: Lights 100 and 200 according to the first and second embodiments are attached to an end of handlebar 6 of bicycle 1. Lights 100 and 200 have an exposed portion 210 (a first portion) that has light emitting units 111, 211 and batteries 112, 212 accommodated therein, and insertion portions 120, 220 (a second portion) configured to be inserted into hollowed handlebar 6 to fix lights 100, 200 to handlebar 6. Lights 100, 200 are provided with an adjustment mechanism to adjust a maximum width of insertion portions 120, 220. The maximum width of insertion portions 120, 220 can be adjusted by using bolts 131, 231 (a rod-shaped member) extending in the axial direction of insertion portions 120, 220 to change an axial length of insertion portions 120, 220.

Light 100 comprises first member 121 and second member 122 and second member 122 is moved relative to first member 121 in an axial direction to adjust an amount by which second member 122 is translated relative to first member 121 in a direction perpendicular to the axial direction, and thus adjust the maximum width of insertion portion 120. First member 121 and second member 122 translate relative to each other in a direction perpendicular to the axial direction in contact with each other such that inclined surfaces 123, 124 extending in a direction which is oblique relative to an axial direction of insertion portion 120 serve as a boundary.

In light 200, bolt 231 is used to apply an axial compressive force to insertion portion 220 to compress it in an axial direction to elastically deform it and increase it in diameter to adjust a maximum width thereof.

Although the present invention has been described and illustrated in detail, it is clearly understood that the same is by way of illustration and example only and is not to be taken by way of limitation, the scope of the present invention being interpreted by the terms of the appended claims.

## Claims

1. A light attached to an end of a hollow handlebar of a bicycle, comprising:
a first portion accommodating a light emitting unit and a battery;
a second portion configured to be inserted into the hollow handlebar to fix the light to the handlebar; and
an adjustment mechanism configured to adjust a maximum width of the second portion,
the second portion having a space therein, the adjustment mechanism being capable of adjusting the maximum width of the second portion by using a bolt extending through the space in the second portion in an axial direction of the second portion to change an axial length of the second portion.

2. The light according to claim 1, wherein the adjustment mechanism includes a first member configuring a portion of the second portion and a second member configuring another portion of the second portion, and the adjustment mechanism adjusts the maximum width of the second portion by translating the second member relative to the first member in a direction perpendicular to the axial direction.

3. The light according to claim 2, wherein the first member and the second member are translatable relative to each other in a direction perpendicular to the axial direction in contact with each other such that a surface extending in a direction which is oblique relative to the axial direction of the second portion serves as a boundary.

4. The light according to claim 1, wherein the bolt of the adjustment mechanism is used to apply an axial compressive force to the second portion to compress the second portion in an axial direction to elastically deform the second portion and increase the second portion in diameter to adjust the maximum width of the second portion.
